# EUROPEAN PATENT APPLICATION

(11) **EP 1 980 838 A1**
(43) Date of publication of application: **15.10.2008**
(21) Application number: 08007062.6
(22) Date of filing: 09.04.2008
(51) Int. Cl.: G01N 21/15, G01N 21/85

(54) **Optical cell, optical sample measurement device, and water quality measurement device**

(30) Priority: 13.04.2007 JP 2007105595
(71) Applicant: Horiba, Ltd., Kyoto (JP)
(72) Inventor: Ito, Masayoshi, Kisshoin Minami-ku Kyoto (JP); Murata, Michio, Kisshoin Minami-ku Kyoto (JP)
(74) Representative: Müller - Hoffmann & Partner

(57) **Abstract**

This invention provides a turbidity measurement device (A) wherein a measurement result can be obtained with high accuracy without being influenced by a flow of the sample or the outside light and with securing an improved optical transparency by cleaning a portion where the light to be measured passes at a time of measurement with a simple structure.

The turbidity measurement device (A) comprises a body unit (U1) comprising a sample introducing section (Ula) and an air tight section (Ulb), a cleaning unit (U2) that is arranged in the sample introducing section (Ula) and that introduces a sample in and out of the sample introducing section (Ula) or confines the sample inside the sample introducing section Ula and that cleans a predetermined section of the sample introducing section (Ula) in association with a rotational movement around a center axis (Ulx) of the elliptical shape in the body unit (U1), a light source (3) that is arranged in the air tight section (Ulb) and that irradiates the light on the liquid sample, and a light detecting section (4) that is arranged in the air tight section Ulb and that detects the transmitted light (LT) and the scattered light (LS) irradiated from the light source (3).

## Description

### BACKGROUND OF THE INVENTION AND RELATED ART

The present claimed invention relates to an optical cell, in particular used for an optical sample measurement device, to an optical sample measurement device that measures particles in a sample, and to a water quality measurement device that measures the turbidity in a liquid sample.

Conventionally, a turbidity measurement device that measures the turbidity in water by means of the transmitted light-scattered light method has been known.

Concretely, this kind of the turbidity measurement device comprises a light source that irradiates the white light, a transparent measurement cell inside of which liquid to be measured flows, a transmitted light detecting device that detects the light that is irradiated from the light source and that passes the measurement cell, and a scattered light detecting device that detects the light scattered by a turbidity component (particles) in the liquid to be measured, wherein the turbidity can be obtained by a ratio of an amount of the scattered light detected by the scattered light detecting device to an amount of the transmitted light detected by the transmitted light detecting device (for example, the patent document 1).

In case that a measurement is continued by this turbidity measurement device, impure substances (for example, bacteria or adherent microalgae) in the liquid to be measured attach to the measurement cell so that the optical transparency of the measurement cell is disturbed. As a result, it becomes unable to conduct the measurement with high accuracy. In order to solve this problem, a cleaning member driven by a motor for rubbing and cleaning a transmitted light window of the measurement cell is arranged so that the transmitted light window can be cleaned on a regular basis (for example, refer to the patent document 2 and the patent document 3).
Patent document 1: Japan patent laid open number 2000-206030
Patent document 2: Japan patent laid open number 4-106747
Patent document 3: Japan patent laid open number 9-113440

### SUMMARY OF THE INVENTION

However, with the above-mentioned conventional arrangement, especially with the arrangement described in the patent document 1, since the sample continues to flow during the measurement, fluctuation generates at a time when the light passes the sample. As a result, the light detected by the light detecting device contains an influence by the flow. In addition, since the light (outside light) other than the light irradiated from the light source also reaches the light detecting device, the measurement result is influenced by the outside light.

With the arrangement described in the patent document 2 and the patent document 3, since the cleaning member is driven by the motor, its structure becomes complicated. In addition, in case of using the turbidity measurement device immersed under water, the motor has to be protected from the water. Then there is a problem that the structure becomes further more complicated.

The above-mentioned problem applies to the turbidity measurement device that adopts not only the transmitted light-scattered light method but also other method wherein the turbidity is detected optically.

In addition, the influence by the flow of the sample or by the outside light is a problem that might generate during measurement not only at a time when the turbidity of liquid is measured but also at a time when minute particles contained in gas is measured.

The present claimed invention focuses attention on the above-mentioned problems, and its main object is to provide an optical sample measurement device wherein a measurement result can be obtained with high accuracy without being influenced by a flow of the sample or by the outside light and with securing an improved optical transparency by cleaning a portion where the light to be measured passes at a time of measuring minute particles with a simple structure.

The objects underlying the present invention are achieved by an optical cell according to independent claim 1 and by an optical sample measurement device according to independent claim 5. Preferred embodiments of the optical cell and of the optical sample measurement device are defined in the respective dependent claims.

More specifically, the optical sample measurement device in accordance with this invention comprises a body unit comprising a bulkhead having a transparent section at least partially and a peripheral wall having a light blocking effect and arranged outside of the bulkhead so as to form a space between the bulkhead and the peripheral wall, wherein an opening section to take in a sample is arranged on the bulkhead and a sample introducing section is formed so that the sample can be confined inside the bulkhead, a cleaning unit comprising a cover section that has a light blocking effect and that is arranged to be movable relative to the body unit so as to be positioned at an opened position wherein the sample can be taken in and out from the sample introducing section by opening the opening section or at a closed position wherein the sample is confined in the sample introducing section by closing the opening section with making the relative movement and a cleaning section that makes a contact with an inner surface of the transparent section and that wipes and cleans the inner surface of the transparent section by making use of the relative movement, a light source that is arranged at a position to front the transparent section in the space and that irradiates the light on the sample at a time when the cover section locates at the above-mentioned closed position, and a light detecting section that is arranged at a position to front the transparent section in the space and that detects the light that is irradiated from the light source and that passes through the transparent section and the sample.

In accordance with this arrangement, it is possible to locate the cover section at the closed position by moving the body unit relative to the cleaning unit so that the sample taken into the sample introducing section can be temporarily confined in the sample introducing section. As a result, it is possible to still the sample in the sample introducing section with preventing the influence by the flow of the sample outside of the sample introducing section (for example, generation of the flow itself confined in the sample introducing section due to a flow of the sample outside of the sample introducing section). In addition, since both the peripheral wall and the cover section have the light blocking effect, it is possible to prevent the outside light from reaching the light detecting section during the measurement. As a result, it is possible for the light detecting section to detect only the light irradiated from the light source. As mentioned, since only the light irradiated from the light source can be detected by the light detecting section, it is possible to conduct the measurement with high accuracy. In addition, since the cleaning section wipes and cleans the inner surface of the transparent sample introducing section that fronts the light source and the light detecting section while the cleaning unit makes the movement relative to the body unit, it is possible to secure an improved optical transparency by cleaning the inner surface of the transparent sample introducing section every time the cleaning unit makes the relative movement, resulting in a further accurate measurement.

As mentioned, it is possible to conduct the measurement with high accuracy with a simple structure wherein the cleaning and the operation of opening or closing the cover section can be conducted at once by making use of a positional relationship between the body unit and the cleaning unit. In addition, since the cleaning and the operation of opening or closing the cover section can be conducted simultaneously with a simple structure, this device can be preferably used also at a time when the measurement is conducted with this device immersed under water.

In order to make it possible to conduct cleaning by the cleaning section with a simple structure, it is preferable that the cleaning unit comprises a substantially cylindrical tubular section, and the tubular section is so arranged to make a rotational movement as being the relative movement around a predetermined axis of the body unit that coincides with the center axis of the tubular section and the cleaning section is arranged on a side peripheral surface of the tubular section.

If the cover section is arranged at a part of an opening end section of the tubular section and is in a shape of a flat plate, a direction to which the cover section moves is in an opening surface of the opening end section. As a result, it is possible to make a resistance received from the sample at a time of opening or closing the cover section smaller than a case wherein a moving direction of the cover section is an axial direction of the opening surface, resulting in a simple structure.

In order to make it possible to conduct the measurement by the use of the transmitted light-scattered light method, it is preferable that the light detecting section comprises a transmitted light detecting section that detects the transmitted light passing through the sample and a scattered light detecting section that detects the scattered light scattered on the sample.

If an optical cell comprises a body unit comprising a bulkhead having a transparent section at least partially and a peripheral wall having a light blocking effect and arranged outside of the bulkhead so as to form a space between the bulkhead and the peripheral wall, wherein an opening section to take in a sample is arranged on the bulkhead and a sample introducing section is formed so that the sample can be confined inside the bulkhead, and a cleaning unit comprising a cover section that has a light blocking effect and that is arranged to be movable relative to the body unit so as to be positioned at an opened position wherein the sample can be taken in and out from the sample introducing section by opening the opening section or at a closed position wherein the sample is confined in the sample introducing section by closing the opening section with making the relative movement and a cleaning section that makes a contact with an inner surface of the transparent section and that wipes and cleans the inner surface of the transparent section by making use of the relative movement, it is possible to preferably apply this optical cell to, for example, the above-mentioned optical sample measurement device.

As a preferable embodiment of a water quality measurement device in accordance with this invention, it is represented by that the water quality measurement device comprises a body unit comprising a bulkhead having a transparent section at least partially and a peripheral wall having a light blocking effect and arranged outside of the bulkhead so as to form an air tight section between the bulkhead and the peripheral wall, wherein an opening section to take in a sample is arranged on the bulkhead and a sample introducing section is formed so that the sample can be confined inside the bulkhead, a cleaning unit comprising a cover section that has a light blocking effect and that is arranged to be movable relative to the body unit so as to be positioned at an opened position wherein the sample can be taken in and out from the sample introducing section by opening the opening section or at a closed position wherein the sample is confined in the sample introducing section by closing the opening section with making the relative movement and a cleaning section that makes a contact with an inner surface of the transparent section and that wipes and cleans the inner surface of the transparent section by making use of the relative movement, a light source that is arranged at a position to front the transparent section in the air tight section and that irradiates the light on the sample at a time when the cover section locates at the above-mentioned closed position, and a light detecting section that is arranged at a position to front the transparent section in the air tight section and that detects the light that is irradiated from the light source and that passes through the transparent section and the sample.

In accordance with this arrangement, since the liquid sample does not enter the air tight section, it is possible to immerse the water quality measurement device in the liquid sample. In addition, it is possible to locate the cover section at the closed position by moving the body unit relative to the cleaning unit so that the sample taken into the sample introducing section can be temporarily confined in the sample introducing section. As a result, it is possible to still the sample in the sample introducing section with preventing the influence by the flow of the sample outside of the sample introducing section (for example, generation of the flow itself confined in the sample introducing section due to a flow of the sample outside of the sample introducing section). In addition, since both the peripheral wall and the cover section have the light blocking effect, it is possible to prevent the outside light from reaching the light detecting section during the measurement. As a result, it is possible for the light detecting section to detect only the light irradiated from the light source. As mentioned, since only the light irradiated from the light source can be detected by the light detecting section, it is possible to conduct the measurement with high accuracy. In addition, since the cleaning section wipes and cleans the inner surface of the transparent sample introducing section that fronts the light source and the light detecting section while the cleaning unit makes the movement relative to the body unit, it is possible to secure an improved optical transparency by cleaning the inner surface of the transparent sample introducing section every time the cleaning unit makes the relative movement, resulting in a further accurate measurement and it is possible to be preferably used for measuring environmental water such as seawater, lake water, river water, clean water or sewage water.

As mentioned, with the optical sample measurement device using the optical cell of this invention, it is possible to prevent the influence by the flow of the sample outside of the body unit and the influence by the outside light at a time of measurement and to secure an improved optical transparency by making the transparent section fronting the light source and the light detecting section every time the body unit makes a movement relative to the cleaning unit with a simple structure wherein the cleaning and the operation of opening or closing the cover section can be conducted at once by making use of a positional relationship between the body unit and the cleaning unit. As a result, it is possible to conduct the measurement with high accuracy.

In addition, in accordance with the water quality measurement device, since liquid sample does not enter the air tight section, it is possible to prevent a problem that the light source or the like accommodated in the air tight section becomes out of order due to the liquid sample. As a result, it is possible to be preferably used for measuring environmental water such as seawater, lake water, river water, clean water or sewage water so as to measure the turbidity in the sample with high accuracy.

### BRIEF DESCRIPTION OF THE DRAWINGS

- **Fig. 1**: is a whole perspective view showing a water quality analyzer into which a turbidity measurement device in accordance with one embodiment of the present claimed invention is incorporated.
- **Fig. 2**: is a structure sectional view of a sensor section of the water quality analyzer in accordance with this embodiment.
- **Fig. 3**: is a whole perspective view showing the turbidity measurement device in accordance with this embodiment.
- **Fig. 4**: is a view showing a longitudinal sectional view of the turbidity measurement device in accordance with this embodiment (cover section: opened position).
- **Fig. 5**: is a view showing a d1-d1 section in Fig. 4 (cover section: opened position).
- **Fig. 6**: is a perspective view showing a cleaning unit in accordance with this embodiment.
- **Fig. 7**: is a plane view showing the cleaning unit in accordance with this embodiment.
- **Fig. 8**: is a side view showing the cleaning unit in accordance with this embodiment.
- **Fig. 9**: is a view showing a longitudinal sectional view of the turbidity measurement device in accordance with this embodiment (cover section: closed position).
- **Fig. 10**: is a view showing a d2-d2 section in Fig. 9 (cover section: closed position).
- **Fig. 11**: is a plane view showing a turbidity measurement device in accordance with another embodiment of the present claimed invention.
- **Fig. 12**: is a view showing a longitudinal sectional view of the turbidity measurement device in accordance with this embodiment (cover section: opened position).
- **Fig. 13**: is a view showing a longitudinal sectional view of the turbidity measurement device in accordance with this embodiment (cover section: closed position)

### DETAILED DESCRIPTION OF THE PREFERRED EMBODIMENTS

One embodiment of the present claimed invention will be explained with reference to drawings.

### First of all, reference is taken to the Figs. in general:

The present invention provides an optical cell U , comprising a body unit U1 comprising a bulkhead 14 having a transparent section at least partially and a peripheral wall 13 having a light blocking effect and arranged outside of the bulkhead so as to form a space U1b between the bulkhead 14 and the peripheral wall 13 , wherein an opening section to take in a sample is arranged on the bulkhead 14 and a sample introducing section U1a is formed so that the sample can be confined inside the bulkhead 14 , and a cleaning unit U2 comprising a cover section 24 that has a light blocking effect and that is arranged to be movable relative to the body unit U1 so as to be positioned at an opened position wherein the sample can be taken in and out from the sample introducing section U1a by opening the opening section or at a closed position wherein the sample is confined in the sample introducing section U1a by closing the opening section with making the relative movement and a cleaning section 23 that makes a contact with an inner surface of the transparent section and that wipes and cleans the inner surface of the transparent section by making use of the relative movement.

The cleaning unit U2 may comprise a substantially cylindrical tubular section 21 , wherein the tubular section 21 is so arranged to make a rotational movement as being the relative movement around a predetermined axis of the body unit U1 that coincides with the center axis U1x of the tubular section 21, and wherein the cleaning section 23 is arranged on a side peripheral surface of the tubular section 21.

The cover section 24 may be arranged at a part of an opening end section of the tubular section 21 and is in a shape of a flat plate.

The light detecting section 4, 4a, 4b may comprise a transmitted light detecting section 4a that detects the transmitted light passing through the sample and a scattered light detecting section 4b that detects the scattered light detecting section 4b that detects the scattered light scattered on the sample.

The present invention further provides an optical sample measurement device A , comprising an optical cell U according to the present invention, a light source 3 that is arranged at a position to front the transparent section in the space U1b and that irradiates the light on the sample at a time when the cover section 24 locates at the above-mentioned closed position, and a light detecting section 4, 4a, 4b that is arranged at a position to front the transparent section in the space U1b and that detects the light that is irradiated from the light source 3 and that passes through the transparent section and the sample.
The optical sample measurement device A according to the present invention may be adapted to measure water quality, wherein said space U1b between the bulkhead 14 and the peripheral wall 13 is formed as an air tight section between the bulkhead 14 and the peripheral wall 13.

Now reference is taken to the Figs. in more detail:

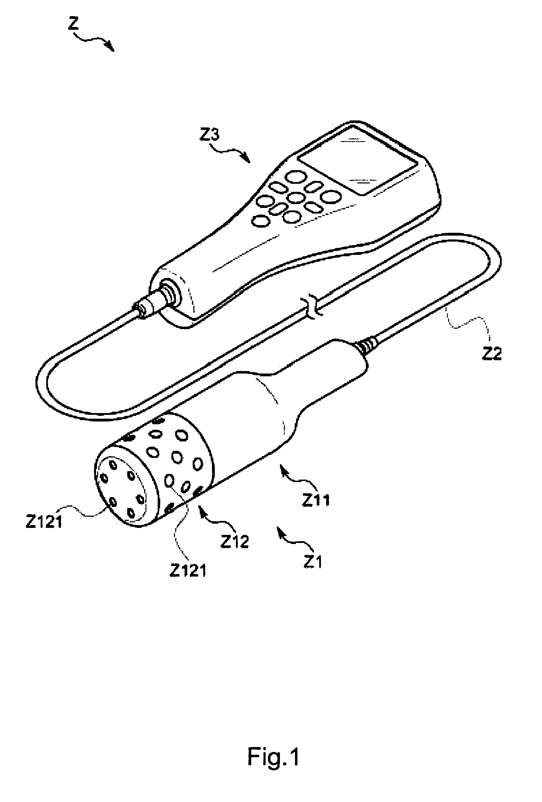

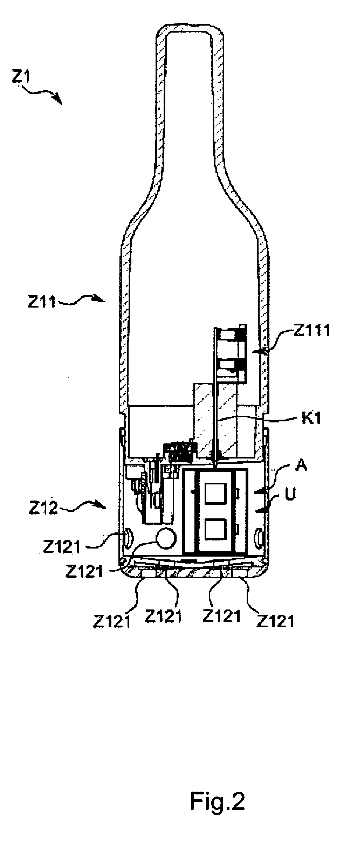

A turbidity measurement device A as being a water quality measurement device in accordance with this embodiment comprises an optical cell U comprising a body unit U1 and a cleaning unit U2, and, as shown in Fig. 1, is incorporated into a water quality analyzer Z that can simultaneously conduct a continuous measurement of an item such as, for example, the pH, the conductivity, the dissolved oxygen concentration and the water temperature in addition to measuring the turbidity. The water quality analyzer Z comprises an immersion sensor section Z1 used in an immersed state under, for example, the sea water or the lake water and an instrument body Z3 that is electrically connected to the sensor section Z1 through a waterproof cable Z2. The sensor section Z1 comprises, as shown in Fig. 1 and Fig. 2, a water tight case Z11, and a sensor accommodating section Z12 that is arranged at a lower end section of the water tight case Z11 and that accommodates and protects various sensors and on which multiple through bores Z121 for taking in a sample are formed, and the turbidity measurement device A in accordance with this embodiment is accommodated in the sensor accommodating section Z12. (refer to Fig. 2)

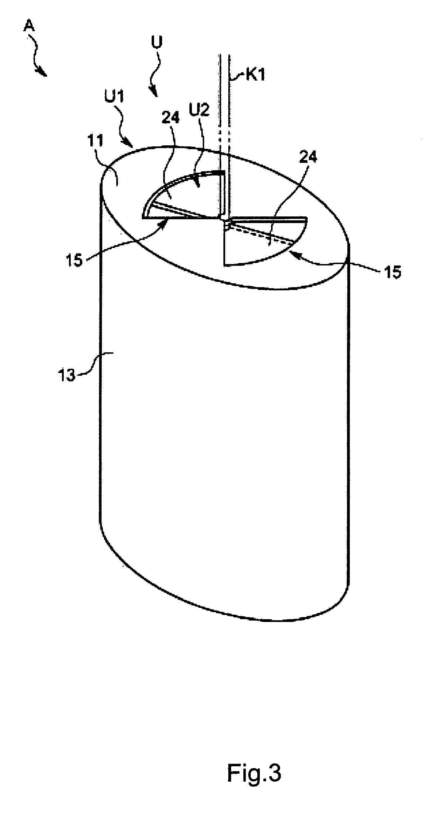

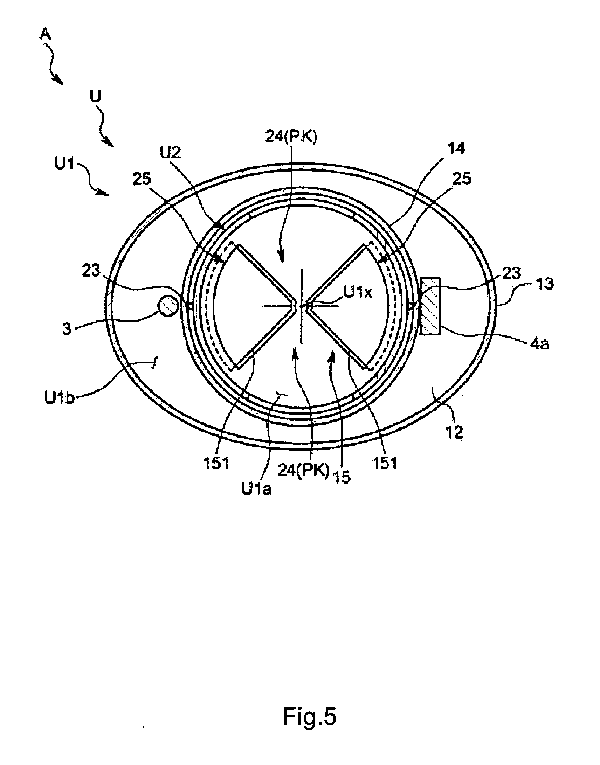

Then the turbidity measurement device A comprises, as shown in Fig. 3, Fig. 4 and Fig. 5, a body unit U1 of a substantially elliptical column shape in external view comprising a sample introducing section U1a that can confine a liquid sample (not shown in drawings) and an air tight section U1b into which no liquid sample enters, a cleaning unit U2 that is arranged in the sample introducing section U1a, that makes a rotational movement around a center axis U1x of the elliptical shape in the body unit U1 so that the sample can be introduced into the sample introducing section U1a or the sample can be confined in the sample introducing section U1a and that cleans a predetermined section of the sample introducing U1a in association with the rotational movement, a light source 3 that is arranged in the air tight section U1b and that irradiates the light on the liquid sample, a transmitted light detecting section 4a that detects the transmitted light passing the liquid sample at a time when the light source 3 irradiates the light, and a scattered light detecting section 4b that detects the scattered light scattered by a turbidity component in the liquid sample. In this embodiment, the cleaning unit U2 is so arranged to make a rotational movement relative to the body unit U1 by operating the instrument body Z3 connected through the cable Z2. Each section will be explained as follows.

The body unit U1 comprises a top wall 11 and a bottom wall 12, each of which is of a substantially elliptical shape in a plane view and that have a light blocking effect, a side peripheral wall 13 that is arranged between the top wall 11 and the bottom wall 12 and that has a light blocking effect, a bulkhead 14 of a cylindrical shape (hereinafter called as a cylindrical bulkhead 14) whose both ends are connected to each inner surface of the top wall 11 and the bottom wall 12 and opening sections 15 arranged on both of the top wall 11 and the bottom wall 12. In this embodiment, the space U1a surrounded by the cylindrical bulkhead 14 is set as the sample introducing section that can temporarily confine the liquid sample taken through the opening section 15, and the space U1b surrounded by the cylindrical bulkhead 14, the top wall 11, the bottom wall 12 and the side peripheral wall 13 arranged outside of the cylindrical bulkhead 14 is set as a liquid-tight air tight section into which no liquid sample enters. Each of the opening section 15 is a bore of a substantial sector form whose central angle is 90 degrees in a plane view. Two opening sections 15 are arranged symmetrically with respect to a point by making use of a center of the sector form as a center point. In addition, in this embodiment, for example, whole of the cylindrical bulkhead 14 is made of transparent glass (more specifically, whole of the cylindrical bulkhead 14 is "the transparent section" in this invention) and the top wall 11, the bottom wall 12 and the side peripheral wall 13 have not only the light blocking effect but also the resistance to water and the resistance to weather.

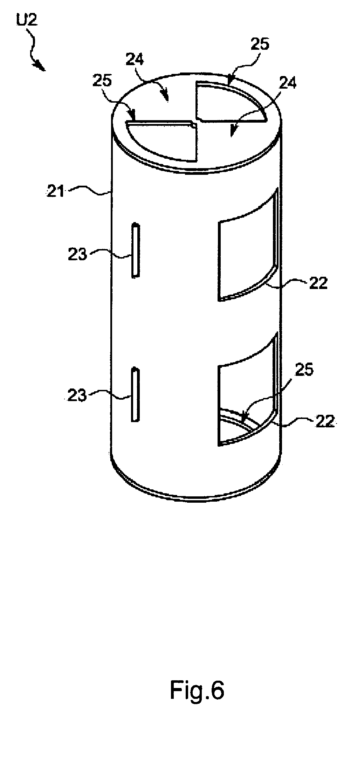

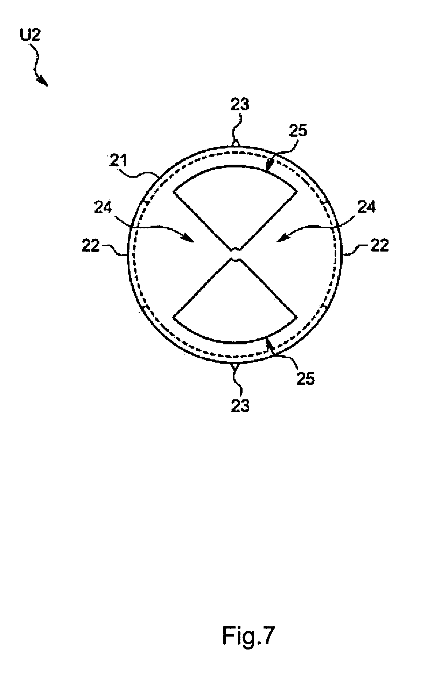

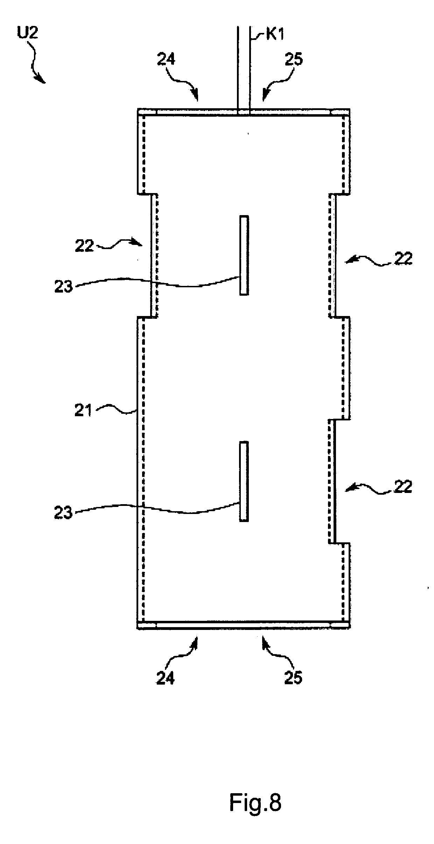

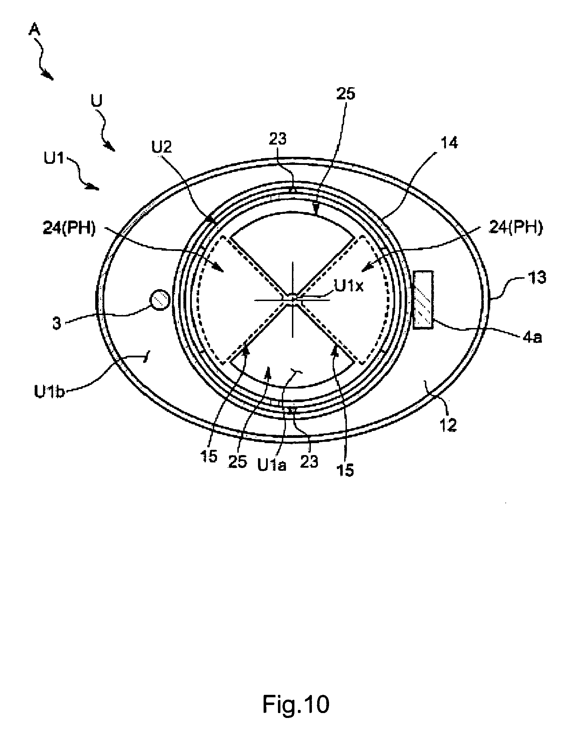

The cleaning unit U2 comprises, as shown in Fig. 6, Fig. 7, Fig. 8, Fig. 9 and Fig. 10, a substantially cylindrical tubular section 21, three light transmitting bores 22 formed on a side peripheral surface of the tubular section 21, a wiper 23 (corresponding to "the cleaning section" in this invention) that is arranged on the side peripheral surface of the tubular section 21 and at least a part of which makes a contact with an inner surface of the cylindrical bulkhead 14 so as to wipe and clean the inner surface of the cylindrical bulkhead 14 while the cleaning unit U2 makes the rotational movement, a cover section 24 having the light blocking effect and arranged at a position where a part of the opening end section of both ends of the tubular section 21 is blocked, and a water introducing port 25 that is arranged on a part of the opening end section that is not blocked by the cover section 24 and that introduces in or out the liquid sample into the tubular section 21.

The tubular section 21 has, for example, the resistance to water and the resistance to weather like the top wall 11 of the body unit U1.

Each of the light transmitting bores 22 is a bore of a substantially rectangle shape and fronts the light source 3, the transmitted light detecting section 4a and the scattered light detecting section 4b respectively at a time when the cover section 24 locates at a closed position (PH).

Two wipers 23 are mounted on a height position where the light source 3 and the scattered light detecting section 4b locate and the other two wipers 23 are mounted on a height position where the transmitted light detecting section 4a locates, namely total four wipers 23 are mounted. In this embodiment, for example, since a longitudinal length of each wiper 23 is set to be longer than a longitudinal length of each light detecting section 4, it is possible to complete cleaning of each light detecting section 4 with one rotational movement. In addition, in this embodiment, since the wiper 23 is made of an elastic material (for example, rubber), its transverse section is generally in a triangular shape and one side of the triangular shape is mounted on the tubular section 21, it is possible to clean the inner surface of the cylindrical bulkhead 14 by the use of the apex portion facing the side of the triangular shape of the wiper 23. With this arrangement, it is possible to obtain an improved cleaning effect without disturbing a smooth rotational movement of the cleaning unit U2.

The cover section 24 is of a substantial sector form whose central angle is 90 degrees. A half in an area of the opening end section of both ends of the tubular section 21 is blocked by arranging two cover sections 24 in symmetric with respect to a point by making use of a center of the sector form as a center point. Then a center of the cover section 24 locating at a top surface side is connected to one end of a rotational supporting axis K1. The other end of the rotational supporting axis K1 is axially supported by a turn supporting section 111 in the water tight case Z11. Then the cleaning unit U2 is rotated relative to the body unit U1 so that the cover section 24 locates at a predetermined position by rotating the rotational supporting axis K1 around its axis with a predetermined operation of the instrument body Z3. More specifically, it is possible for the cover section 24 to locate at an opened position (PK) wherein the liquid sample can go into and come out of the sample introducing section U1a by opening the opening section 15 or at a closed position (PH) wherein the liquid sample is confined inside the sample introducing section U1a by closing the opening section 15. In this embodiment, the cover section 24 has not only the light blocking effect but also the resistance to water and the resistance to weather, like the top wall 11 of the body unit U1.

Each of the water introducing port 25 is a bore having a substantial sector form whose central angle is 90 degrees. A half in an area of the opening end section of both ends of the tubular section 21 is blocked by arranging two water introducing ports 25 in symmetric with respect to a point by making use of a center of the sector form as a center point.

The light source 3 uses, for example, a tungsten lamp. In this embodiment, the light is irradiated on the sample from the light source 3 at a time when the cover section 24 locates at the closed position (PH).

When the transmitted light detecting section 4a detects the transmitted light, the transmitted light detecting section 4a converts a luminous intensity of the transmitted light into an electrical signal and outputs it as a transmitted light detected signal to the instrument body Z3.

When the scattered light detecting section 4b detects the scattered light, the scattered light detecting section 4b converts a luminous intensity of the scattered light into an electrical signal and outputs it as a scattered light detected signal to the instrument body Z3.

In this embodiment, the light source 3 and the scattered light detecting section 4b are arranged generally at the same height and the transmitted light detecting section 4a is arranged at a height lower than that of the light source 3 and the scattered light detecting section 4b.

A method for measuring the turbidity in the water by the use of the turbidity measurement device A having the above structure will be explained.

### (1) Taking in the sample

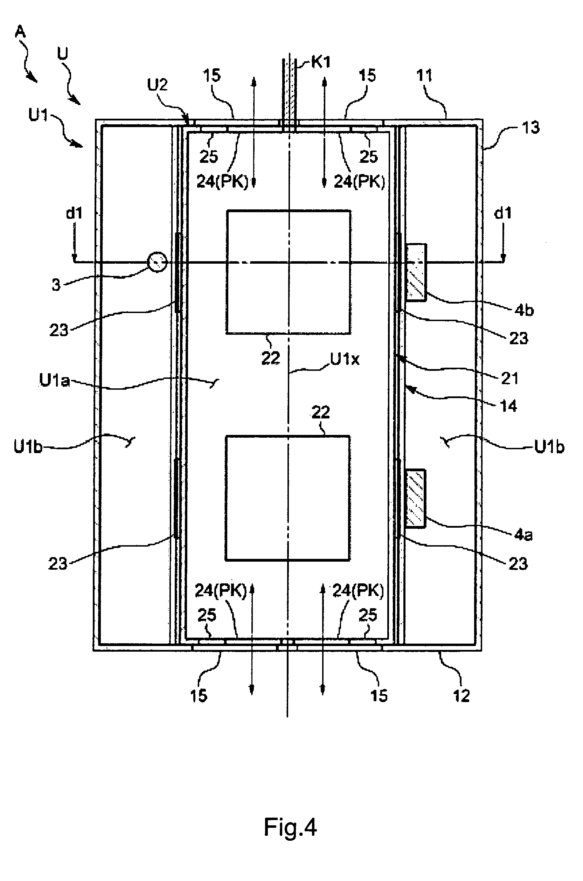

First, a predetermined operation is provided with the instrument body Z3 to rotationally move the cleaning unit U2 relative to the body unit U1 so that the cover section 24 locates at the opened position (PK) with keeping a state whole of the turbidity measurement device A is immersed under the water. Since the opening section 15 opens with this operation, it is possible to take in the liquid sample into inside of the sample introduction section U1a through the opening section 15 (refer to Fig. 4).

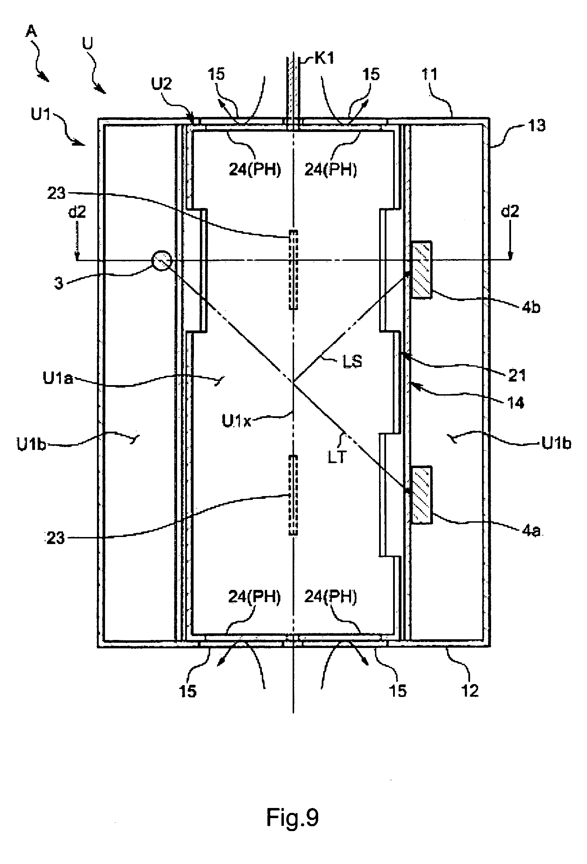

Next, a predetermined operation is provided with the instrument body Z3 to further rotationally (for example, more than a half through one rotation) move the cleaning unit U2 relative to the body unit U1 so that the cover section 24 locates at the closed position (PH). Since the opening section 15 closes with this operation, it is possible to confine the liquid sample that has been taken inside of the sample introduction section U1a (refer to Fig. 9).

While the cleaning unit U2 makes the rotational movement relative to the body unit U1, the inner surface of the cylindrical bulkhead 14 is cleaned with a movement that the wiper 23 contacts the inner surface of the cylindrical bulkhead 14. As a result, an improved optical transparency can be secured for the cylindrical bulkhead 14, which makes it possible to conduct the measurement with high accuracy.

### (2) At a time of measurement

Each light transmitting bore 22 of the cleaning unit U2 is positioned at a position fronting the light source 3, the transmitted light detecting section 4a and the scattered light detecting section 4b respectively at a time when the cover section 24 locates at the closed position (PH).

When the light is irradiated on the liquid sample from the light source 3 by providing the instrument body Z3 with a predetermined operation, the transmitted light LT passing the liquid sample and the scattered light LS scattered by the turbidity component in the liquid sample are generated, as shown in Fig. 9. When each of the transmitted light detecting section 4a and the scattered light detecting section 4b (hereinafter called as the light detecting section 4) detects the luminous intensity of the transmitted light LT and the luminous intensity of the scattered light LS respectively, the light detecting section 4 converts the luminous intensity into the electrical signal and outputs the electrical signal as the detected signal to the instrument body Z3.

Then the instrument body Z3 calculates an intensity ratio of the transmitted light LT and the scattered light LS based on each detected signal so that the instrument body Z3 can obtain the turbidity by comparing the intensity ratio with the previously obtained intensity ratio.

Since the sample is confined in the sample introducing section U1a, it is possible to prevent the influence by the flow of the sample existing outside of the sample introducing section U1a (for example, to prevent generation of the flow in the sample itself confined in the sample introducing section U1a influenced by the flow of the sample existing outside of the sample introducing section U1a). As a result, it is possible to conduct the measurement with high accuracy.

In addition, since the top wall 11, the bottom wall 12 and the side peripheral wall 13 of the body unit U1 and the cover section 24 of the cleaning unit U2 have the light blocking effect, it is possible to prevent the outside light entering the sample introducing section U1a and the air tight section U1b so that the outside light can be prevented from reaching the light detecting section 4. As a result, it is possible to conduct the measurement with high accuracy.

with the turbidity measurement device A of the above-mentioned arrangement in accordance with this embodiment, it is possible to conduct the measurement with high accuracy by preventing the influence by the flow of the sample outside of the body unit U1 and the influence by the outside light at a time of measurement with a simple structure wherein the cover section 24 opens or closes the opening section 15 by making use of the positional relationship between the body unit U1 and the cleaning unit U2 that makes a rotational movement around the central axis U1x of the body unit U1. Furthermore, since the wiper 23 wipes and cleans the inner surface of the cylindrical bulkhead 14 so that an improved optical transparency can be secured every time the cleaning unit U2 makes a rotational movement. As a result, it is possible to conduct the measurement with high accuracy.

More specifically, it is possible to provide the turbidity measurement device A that can measure the turbidity with high accuracy without receiving the influence by the flow of the sample or the influence by the outside light at a time of measurement and with securing an improved optical transparency by making a portion where the measurement light passes clean with a simple structure wherein the cleaning and the operation of opening or closing the cover section 24 can be conducted at once by making use of the positional relationship between the body unit U1 and the cleaning unit U2.

Since the opening section 15 is arranged on the top wall 11 and the bottom wall 12 of the body unit U1 respectively, it is possible to introduce the sample into the sample introducing section U1a easily. In addition, since a rotational direction of the cover section 24 is in a direction of a surface of the cover section 24, a resistance received from the sample at a time of opening or closing the cover section 24 becomes smaller compared with a case wherein a moving direction to open or close the cover section 24 is an axial direction of the cover section 24. As a result, it is possible to realize a simple structure.

In addition, since no liquid sample enters the internal space of the air tight section U1b, a problem such as malfunction of the light source 3 because the liquid sample enters will not be generated. As a result, it is possible to measure the turbidity in the sample with high accuracy by preferably using the turbidity measurement device A for measuring environmental water such as sea water, lake water, river water, clean water or sewage water.

The present claimed invention is not limited to the above-mentioned embodiment.

For example, a structure of the optical cell U may be appropriately modified such that the cleaning unit U2 is slid to move toward a direction of a center axis U1x of the body unit U1.

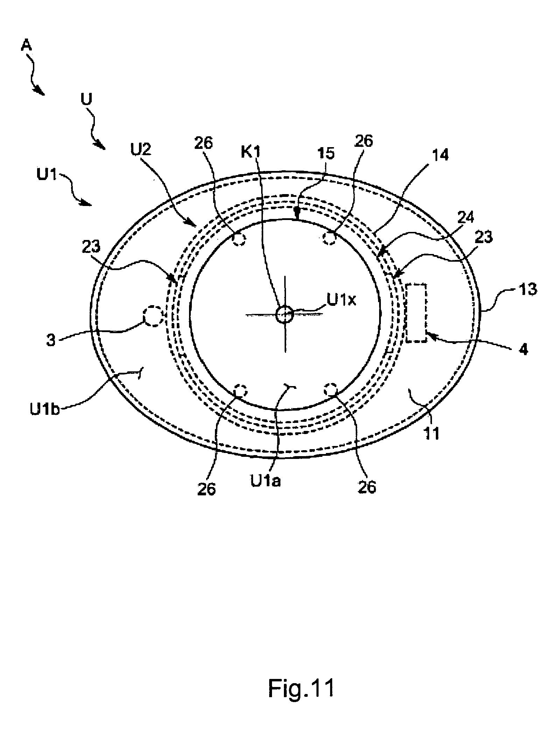

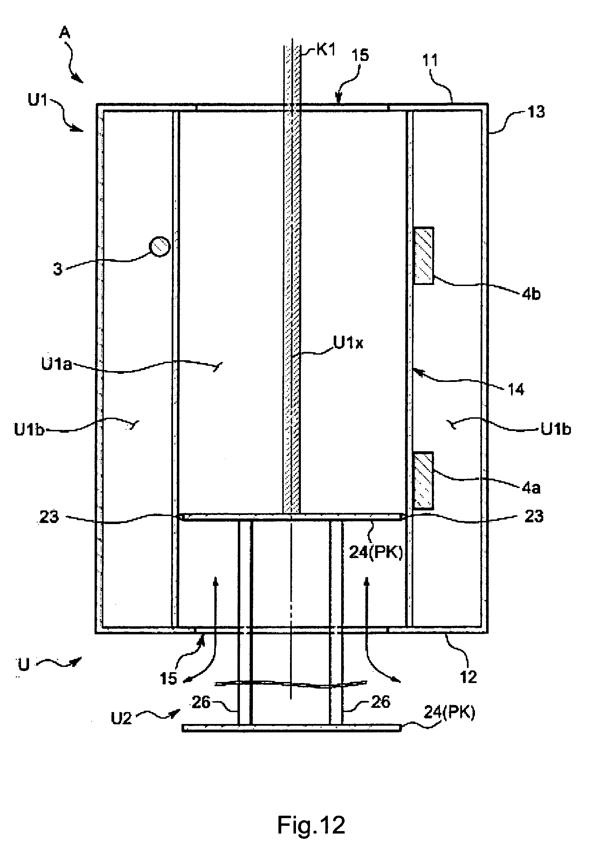

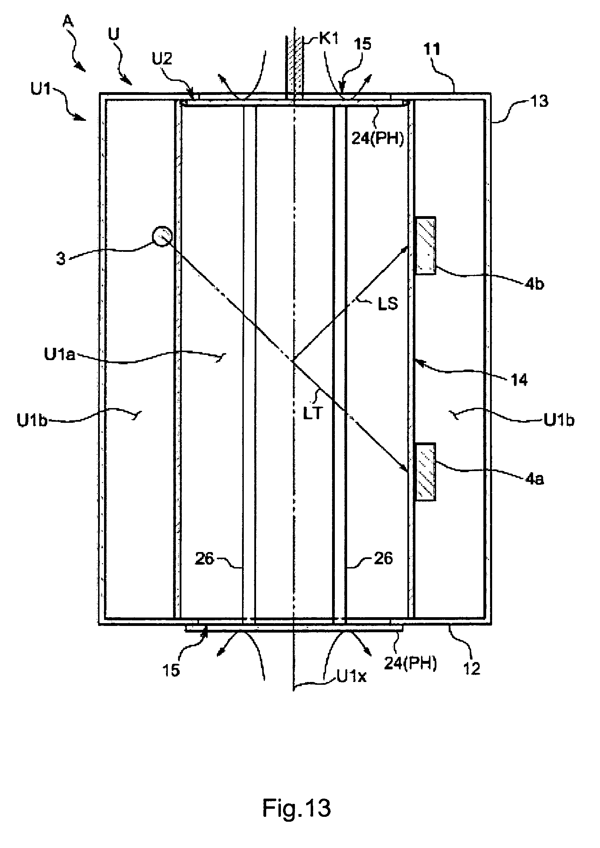

More concretely, as shown in Fig. 11, Fig. 12 and Fig. 13, the body unit U1 comprises opening sections 15 of a circular form in plane view formed on a top wall 11, a bottom wall 12, and the cleaning unit U2 comprises cover sections 24 each of which is a circular form having a diameter a little bigger than a diameter of the opening section 15 in plane view, four supporting posts 26 connecting the cover section 24 and the other cover section 24 and a wiper 23 mounted on a peripheral edge section of one of the cover sections 24 so that the cover sections 24 can be positioned at an opened position (PK) or a closed position (PH) by making a sliding movement of the cleaning unit U2 relative to the body unit U1.

In addition, the transmitted light-scattered light measuring method is used as the measuring method in this embodiment, however, a measuring method by making use of other light (a transmitted light measuring method, a surface scattered light measuring method, a scattered light measuring method, an integrating sphere method or the like) may be used. It is a matter of course that a kind, a number or an arranged place of the light source or the light detecting section can be appropriately modified in association with a measuring method to be adopted.

In addition, the light transmitting bore 22 of the cleaning unit U2 may be, for example, a window made of glass.

A shape, a number, a material and an arranged place of the wiper 23 may be appropriately modified in association with the embodiment.

In addition, the object to be measured is not limited to the liquid sample and may be a gaseous sample. In case that the object is the gaseous sample, it is possible to measure a degree of minute articles contained in the gaseous sample. In this case, the air tight section U1b may be an ordinal space, not liquid tight.

In addition, the light source 3 may irradiate the light continuously. In this case, the detected signal may be taken by the scattered light detecting section 4b only at a tie when the cover section 24 locates at the closed position (PH).

Each of the concrete structure is not limited to the above-mentioned embodiment, and may be variously modified without departing from a spirit of the invention.

## Claims

1. Optical cell (U),
comprising:
- a body unit (U1) comprising a bulkhead (14) having a transparent section at least partially and a peripheral wall (13) having a light blocking effect and arranged outside of the bulkhead so as to form a space (U1b) between the bulkhead (14) and the peripheral wall (13), wherein an opening section to take in a sample is arranged on the bulkhead (14) and a sample introducing section (U1a) is formed so that the sample can be confined inside the bulkhead (14), and
- a cleaning unit (U2) comprising a cover section (24) that has a light blocking effect and that is arranged to be movable relative to the body unit (U1) so as to be positioned at an opened position wherein the sample can be taken in and out from the sample introducing section (U1a) by opening the opening section or at a closed position wherein the sample is confined in the sample introducing section (U1a) by closing the opening section with making the relative movement and a cleaning section (23) that makes a contact with an inner surface of the transparent section and that wipes and cleans the inner surface of the transparent section by making use of the relative movement.

2. Optical cell (U) according to claim 1,
- wherein the cleaning unit (U2) comprises a substantially cylindrical tubular section (21),
- wherein the tubular section (21) is so arranged to make a rotational movement as being the relative movement around a predetermined axis of the body unit (U1) that coincides with the center axis (U1x) of the tubular section (21), and
- wherein the cleaning section (23) is arranged on a side peripheral surface of the tubular section (21).

3. Optical cell (U) according to claim 2,
wherein the cover section (24) is arranged at a part of an opening end section of the tubular section (21) and is in a shape of a flat plate.

4. Optical cell (U) according to any one of the preceding claims,
wherein the light detecting section (4, 4a, 4b) comprises a transmitted light detecting section (4a) that detects the transmitted light passing through the sample and a scattered light detecting section (4b) that detects the scattered light scattered on the sample.

5. Optical sample measurement device (A),
comprising:
- an optical cell (U) according to any one of the preceding claims,
- a light source (3) that is arranged at a position to front the transparent section in the space (U1b) and that irradiates the light on the sample at a time when the cover section (24) locates at the above-mentioned closed position, and
- a light detecting section (4, 4a, 4b) that is arranged at a position to front the transparent section in the space (U1b) and that detects the light that is irradiated from the light source (3) and that passes through the transparent section and the sample.

6. Optical sample measurement device (A) according to claim 5,
- which is adapted to measure water quality,
- wherein said space (U1b) between the bulkhead (14) and the peripheral wall (13) is formed as an air tight section between the bulkhead (14) and the peripheral wall (13).
